# EUROPÄISCHE PATENTSCHRIFT

(11) **EP 0 569 336 B1**
(45) Veröffentlichungstag und Bekanntmachung des Hinweises auf die Patenterteilung: **12.06.1996**
(21) Anmeldenummer: 93810323.1
(22) Anmeldetag: 04.05.1993
(51) Int. Cl.: B31B 3/30, B29C 53/50, B29C 65/18

(54) **Vorrichtung zum Herstellen von flachen Verpackungsbeuteln aus einer flexiblen Folie**
Apparatus for making flat packaging bags from a flexible film
Dispositif pour la fabrication de sacs d'emballage plats à partir d'un film flexible

(30) Priorität: 06.05.1992 CH 1451/92
(43) Veröffentlichungstag der Anmeldung: 10.11.1993
(73) Patentinhaber: SIG Schweizerische Industrie-Gesellschaft, CH-8212 Neuhausen am Rheinfall (CH)
(72) Erfinder: Altermatt, Willy, CH-8212 Neuhausen am Rheinfall (CH); Kopp, Georg, CH-8248 Uhwiesen (CH)
(74) Vertreter: Münch, Otto

(56) Entgegenhaltungen:
- DE-A- 1 815 029
- DE-A- 4 020 391
- FR-A- 1 130 714
- US-A- 2 246 043
- US-A- 4 079 662
- US-A- 4 277 302
- US-A- 4 552 613

## Beschreibung

Aus der US-PS 4,552,613 ist eine Vorrichtung zum Herstellen von flachen Verpackungsbeuteln aus einer Kunststofffolie bekannt. Die Vorrichtung hat zwei senkrecht angeordnete, gestellfeste Dorne, über welche je eine Folie zu einem Schlauch geformt und mit Längssiegelbacken verschweisst wird. Auf zwei separaten Schlitten sitzen zwei Quersiegelbacken. Die Schlitten sind formschlüssig mit einem hin und her gehendenen Antrieb kuppelbar. Während der Querschweissung ziehen die Quersiegelbacken einen Beutel nach unten ab und trennen ihn nach dem Befüllen von der Folienbahn.

In der US-A-2 246 043 ist eine Vorrichtung zur kontinuierlichen Herstellung von Rohren beschrieben. Auf einem Schlitten ist ein Dorn befestigt, um welchen mittels eines gestellfesten Faltkörpers mit einer Papierbahn ein Rohr geformt wird. Die überlappten Längsränder der Bahn werden zusammengeleimt und bei der Längsbewegung des Dorns durch einen ortsfesten Schuh gegeneinander gepresst. Bei der Vorschubbewegung des Schlittens wird das Rohr mittels Klemmbacken an den Dorn gepresst. Wenn der Schlitten seine vordere Grenzstellung erreicht hat, wird ein Rohrstück durch ein umlaufendes Messer abgeschnitten. Um bei der Rückwärtsbewegung des Schlittens zu verhindern, dass das Rohr mitbewegt, wird die Bahn beim hinteren Ende des Faltkörpers festgeklemmt. Dies setzt allerdings eine relativ steife Papierbahn voraus. Zur Herstellung von Schlauchbeuteln aus einer flexiblen Folie ist diese Vorrichtung deshalb nicht geeignet.

Der vorliegenden Erfindung liegt die Aufgabe zugrunde, eine Vorrichtung der eingangs geschilderten Art derart auszubilden, dass sie mit hoher Kadenz betriebssicher arbeitet und gut bedienbar ist. Diese Aufgabe wird durch die Merkmalskombination gemäss Anspruch 1 gelöst.

Nachfolgend wird ein Ausführungsbeispiel der Erfindung anhand der Zeichnung erläutert. Darin zeigt:
Fig. 1 eine schematische Seitenansicht einer Vorrichtung,

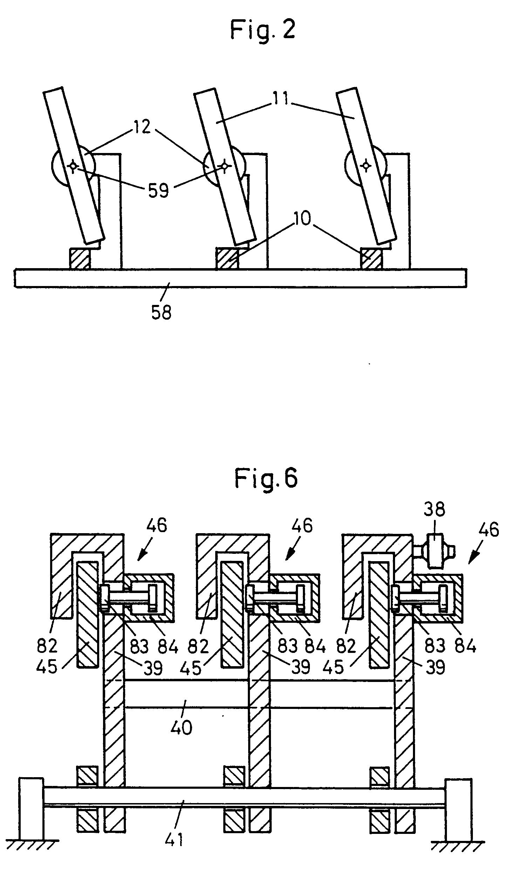

Fig. 2 eine Ansicht in Richtung des Pfeils II in Fig. 1, und
Fig. 3 bis 6 Schnitte längs den Linien III-III bis VI-VI in Fig. 1

Auf der dargestellten Vorrichtung werden nebeneinander mehrere, im dargestellten Beispiel drei, flache Beutel 3 aus Kunststofffolie 2 gleichzeitig geformt. Die Beutel 3 haben eine angelegte Flossen-Längssiegelnaht 4 und einseitig eine Quersiegelnaht 5. Sie werden erst anschliessend an die dargestellte Vorrichtung in einer separaten Einrichtung befüllt und mit einer zweiten Quersiegelnaht verschlossen. Jede Folienbahn 2 hat längs ihres einen Randes Marken 6 im Abstand der herzustellenden Beutellänge. Jeder Folienbahn 2 ist eine Lichtschranke 7 zugeordnet welche einer Steuereinrichtung das Bahnende meldet, wenn die Vorratsrolle verbraucht ist.

Auf einem Gestell 10 sind mehrere Umlenkrollen 11 um 0°-30° geneigt zur Vertikalen drehbar gelagert, über welche die Folien 2 von den nichtdargestellten Vorratsrollen abgezogen werden. Stromabwärts der Rollen 11 sind am Gestell 10 runde Führungsscheiben 12 montiert, über welche die Folien 2 gezogen werden. In je einem rohrförmigen Faltkörper 13 werden die Folien zu einem Schlauch geformt. Am stromabwärtigen Ende ist am Gestell 10 ein Lagerbock 14 befestigt, auf welchem zwei durchgehende, für alle Folienbahnen gemeinsame Quersiegelbacken 15 mit Messern 16 quer zur Vorschubrichtung A verschiebbar gelagert sind. Die Backen 15 werden durch Pneumatikzylinder 17 betätigt.

Auf dem Gestell 10 sind pro Folienbahn zwei hintereinander angeordnete, durch eine Kuppelstange 22 starr miteinander verbundene Schlitten 20, 21 in Vorschubrichtung A auf Schienen 23 verschiebbar gelagert. Der hintere Schlitten 20 trägt einen kreiszylindrischen, rohrförmigen, beidseitig offenen Dorn 24. Am vorderen Dornende ist ein flacher Spreizer 25 montiert, dessen Breite in Richtung der Längserstreckung der Backen 15 grösser ist als der Durchmesser des Dorns 24. Am vorderen Schlitten 21 ist eine Längssiegelbacke 26 quer zur Vorschubrichtung A schwenkbar gelagert.

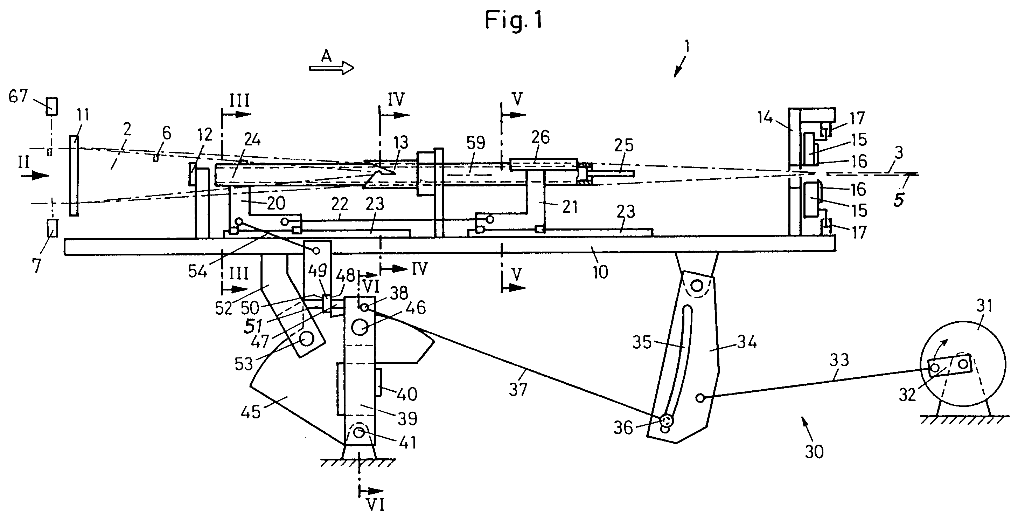

Alle Schlitten 20, 21 haben einen gemeinsamen Antrieb 30 bestehend aus einem Motor 31, der über eine Kurbel 32 und eine Gelenkstange 33 einen Schwenkhebel 34 treibt. Am Hebel 34 ist in einem kreisbogenförmigen Schlitz 35 ein Gelenk 36 einer zweiten Gelenkstange 37 einstellbar befestigt, um die abzuziehende Beutellänge einzustellen. Das Krümmungszentrum des Schlitzes 35 befindet sich in der in Fig. 1 dargestellten hinteren Totpunktlage der Kurbel 32 im anderen Gelenk 38 der Stange 37. Die Stange 37 treibt mehrere zweite Schwenkhebel 39, die um eine gemeinsame Schwenkachse 41 schwenkbar und über eine Verbindungsstange 40 starr miteinander verbunden sind.

Um die selbe Achse 41 ist pro Bahn ein dritter Schwenkhebel 45 schwenkbar. Jeder Hebel 39 trägt eine Klemmeinrichtung 46, mit welcher er mit dem betreffenden Hebel 45 kraftschlüssig kuppelbar ist. Jeder Hebel 39 hat ausserdem einen Anschlag 47, der im Normalbetrieb an der einen Stirnfläche 48 einer am betreffenden Hebel 45 befestigten Lasche 49 anliegt. In der in Fig. 1 dargestellten hinteren Totpunktstellung liegt die gegenüberliegende Stirnfläche 50 der Lasche 49 gegen einen gehäusefesten Anschlag 51 an. Der Anschlag 51 ist an einem Arm 52 befestigt, der zusätzlich eine weitere Klemmeinrichtung 53 trägt, mit welcher der betreffende Hebel 45 blockiert werden kann, wenn die zugehörige Einrichtung 46 gelöst ist. Jeder Hebel 45 ist über eine weitere Gelenkstange 54 mit dem zugehörigen hinteren Schlitten 20 verbunden.

Die beiden Schlitten 20, 21 jeder Bahn sind mit je vier Rollen 63 auf den Schienen 23 gelagert. Der Dorn 24 ist an seinem stromaufwärtigen Ende über einen horizontal abstehenden Arm 64 am Schlitten 20 befestigt. Benachbart dieser Befestigungsstelle ist eine Klemmbacke 65 mittels eines Pneumatikzylinders 66 gegen den Dorn 24 anpressbar, um beim Vorwärtshub der Schlitten 20, 21 die Folie 2 mitzunehmen. Am Gestell 10 ist ferner für jede Folienbahn eine weitere Reflexlichtschranke 67 montiert, welche die Marken 6 des Folienrandes abfühlt.

Der zwischen den beiden Schlitten 20, 21 am Gestell 10 befestigte Faltkörper 13 umschlingt den Dorn 24 mit Spiel und hat einen Formschlitz 71, in welchen eine Zunge 72 zur Bildung einer gefalteten Flossen-Längsnaht eingreift. Der Schlitz 71 und die Zunge 72 sind oberhalb der gemeinsamen Ebene der Achsen 59, damit die fertige Längs-Siegelnaht 4 vollständig auf einer der Grossseiten des flachen Beutels 3 benachbart dessen Rand liegt. Dadurch können beide Grossflächen der Beutel ohne Unterbruch durch eine Naht bedruckt sein.

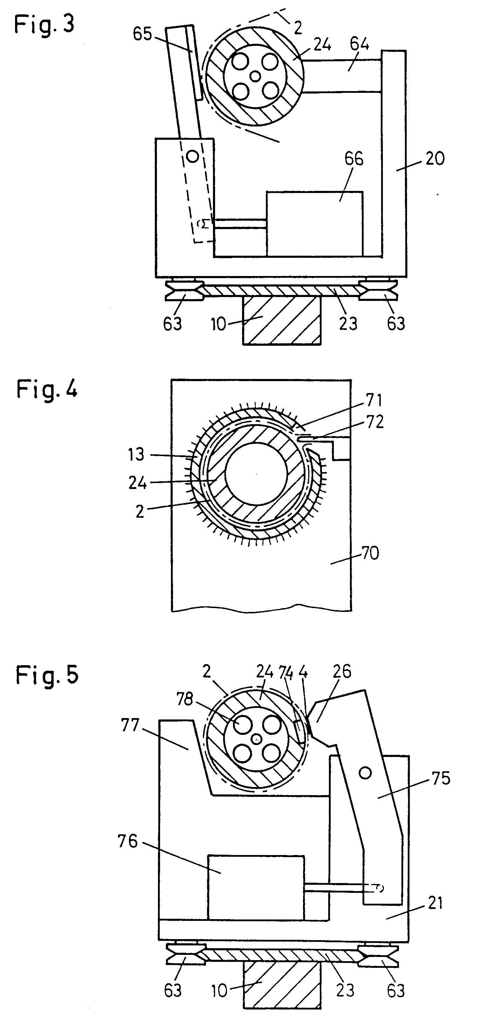

Am vorderen Schlitten 21 ist die Längssiegelbacke 26 an einem Hebel 75 befestigt, der um eine zur Vorschubrichtung A parallele Achse schwenkbar gelagert ist. Der Dorn 24 hat an dieser Stelle einen Antihaft-Belag 74, z.B. aus PTFE, damit beim Versiegeln der gefalteten Flossen-Längssiegelnaht die Folieninnenseite nicht am Dorn 24 haftet. Der Hebel 75 ist mittels eines Pneumatikzylinders 76 schwenkbar. Diametral gegenüberliegend der Längssiegelbacke 26 ist am Schlitten 21 ein Gegenhalter 77 befestigt. Bei abgehobener Backe 26 hat der Gegenhalter 77 zum Dorn 24 geringfügig Spiel, um ein leichtes Durchziehen der Folie 2 zu ermöglichen. In Fig. 5 sind zudem noch Bohrungen 78 am stromabwärtigen Stirnende des Dorns 24 gezeigt. Durch diese Bohrungen 78 strömt beim Rückwärtshub der Schlitten 20, 21 Luft, um einen Pumpeffekt zu vermeiden.

Aus Fig. 6 ist die Klemmeinrichtung 46 zwischen den Hebeln 39 und 45 ersichtlich. Jeder Hebel 39 umgreift den zugehörigen Hebel 45 mittels eines Gegenhalters 82 mit geringfügigem Spiel. An jedem Hebel 39 ist gegenüber dem Gegenhalter 82 ein Klemmschuh 83 mittels eines Zylinders 84 angepresst. Dadurch wird im Normalbetrieb der Hebel 45 durch den zugehörigen Hebel 39 mitgenommen. Die Klemmeinrichtungen 53 sind analog ausgebildet.

Die Betriebsweise der beschriebenen Vorrichtung ist wie folgt: Im vorderen Totpunkt der Kurbel 32 werden über eine nicht dargestellte Steuereinrichtung die beiden Quersiegelbacken 15 mit den Messern 16 gegeneinander bewegt. Dabei wird die Quersiegelnaht 5 gebildet und gleichzeitig der zuvor hergestellte, einseitig offene Beutel 3 abgetrennt. Während dieses Quersiegelvorganges treibt der Antrieb 30 die Schlitten 20, 21 mit den gelösten Backen 26, 65 in die hintere Totpunktlage. Nachdem die Schlitten 20, 21 die hintere Totpunktlage durchfahren haben, werden pro Bahn die beiden Backen 26, 65 mittels der Zylinder 66, 76 gegen den Dorn 24 angepresst. Hat der Fühler 67 die Marke 6 gemeldet, werden die Zylinder 66, 76 etwas später aktiviert, wodurch eine etwas geringere Folienlänge abgezogen wird. Meldet der Fühler 67 "keine Marke", werden die Zylinder 66, 76 sofort nach Durchlaufen des Totpunktes aktiviert, wodurch eine etwas grössere Folienlänge abgezogen wird. Durch den Anteil von "grösseren" bzw. "geringeren" Folienlängen wird die Folienzufuhr registerhaltig. Die Folie 2 wird nun über die Umlenkrolle 11 von der Vorratsrolle um eine Beutellänge abgezogen und gleichzeitig die Längssiegelnaht 4 geschweisst. Durch die individuelle Ansteuerung der Backen 26, 65 jeder Bahn wird eine genaue Synchronisation der Vorschubhübe mit den Abständen zwischen den Marken 6 jeder Bahn erreicht. Dadurch können bereits bedruckte Folien 2 problemlos zu Beuteln 3 passender Länge verarbeitet werden. Weil unmittelbar nach dem Totpunkt die Hubgeschwindigkeit der Schlitten 20, 21 gering ist, erfolgt das Erfassen der Folie 2 mittels der Backen 26, 65 beim Vorwärtshub der Schlitten 20, 21 genau und praktisch schlupffrei. Durch die doppelte Erfassung können auch sehr dünne Folien 2 verarbeitet werden. Zum Einstellen auf eine andere Beutellänge wird das Gelenk 36 im Schlitz 35 entsprechend verstellt.

Wenn eine Folienbahnen 2 zu Ende ist, wird mittels des Signals des entsprechenden Fühlers 7 die zugehörige Klemmeinrichtung 46 gelöst und die Klemmeinrichtung 53 geklemmt. Die Backen 26, 65 dieser Bahn sind dann automatisch ausser Betrieb, weil die Schlitten 20, 21 blockiert sind. Die übrigen Bahnen laufen normal weiter, während bei der unterbrochenen Bahn die Vorratsrolle für die Folie 2 ausgewechselt und deren Anfang ans Ende der vorangegangenen angeheftet wird.

Beim Wiedereinschalten der unterbrochenen Bahn wird die Klemmeinrichtung 46 geklemmt und die Klemmeinrichtung 53 gelöst. Der Hebel 39 nimmt nun den betreffenden Hebel 45 mit. Beim nächstfolgenden Rückwärtshub schlägt die Lasche 49 am Anschlag 51 an. Danach schleift der Klemmschuh 83 auf dem Hebel 45, bis der hintere Totpunkt entsprechend der Darstellung nach Fig. 1 erreicht ist. Anschliessend schwenken wieder alle Hebel 45 synchron. Die Klemmkraft der Klemmeinrichtung 46, das heisst der Druck im Zylinder 84, ist so eingestellt, dass sie grösser als für die hin und her Bewegung der Schlitten 20, 21 erforderlich aber so gering ist, dass der Antrieb 30 bei der beschriebenen Einstellbewegung nicht blockiert wird.

Die beschriebene Vorrichtung kann mit hoher Kadenz Beutel 3 herstellen. Wegen der horizontalen Anordnung ist sie sehr übersichtlich und einfach zu bedienen. Die Einzelsteuerung der Bahnen trotz gemeinsamem Antrieb ermöglicht einen wirtschaftlichen Einsatz. Die steile Lage der Umlenkrollen 11 ermöglicht es, die mehreren Dorne 24 dicht nebeneinander anzuordnen, so dass die Vorrichtung trotz der mehreren Bahnen kompakt ist. Der Gegenhalter 77 ergibt beim Anpressen der Längssiegelbacke 26 eine zusätzliche, diametral gegenüberliegende Klemmstelle, so dass die Folie 2 symetrisch abgezogen wird. Dies ergibt einen präzisen Folieneinzug. Dadurch kann die Längssiegelnaht 4 schmal ausgebildet und damit Verpackungsmaterial eingespart werden.

## Patentansprüche

1. Vorrichtung zum Herstellen von flachen Verpackungsbeuteln (3) aus einer flexiblen Folie (2) mit einer Längssiegelnaht (4) und einer Quersiegelnaht (5), umfassend:
a) ein Gestell (10);
b) einen auf dem Gestell (10) in Transportrichtung (A) längsverschiebbar geführten Schlitten (20,21);
c) einen am Schlitten (20,21) befestigten Dorn (24), um welchen mit der Folie (2) ein Schlauch geformt wird;
d) eine am Schlitten (20,21) quer zur Transportrichtung (A) beweglich gelagerte Längssiegelbacke (26) zum Herstellen der Längssiegelnaht (4);
e) ein erstes Hubelement (76) zum Anpressen und Lösen der Längssiegelbacke (26);
f) einen Antrieb (30) für die hin und hergehende Bewegung des Schlittens (20,21);
g) einen am Gestell (10) starr befestigten Faltkörper (13), der den Dorn (24) mit Spiel umgibt;
h) eine quer zur Vorschubrichtung (A) angeordnete Quersiegelbacke (15), die am Gestell (10) senkrecht zur Vorschubrichtung (A) und zur Längserstreckung der Quersiegelbacke (15) verschiebbar gelagert ist;
i) ein zweites Hubelement (17) zum Verschieben der Quersiegelbacke (15); sowie
k) Trennmittel (16) zum Abtrennen der Beutel (3).

2. Vorrichtung nach Anspruch 1, wobei der Dorn (24) ein beidseitig offenes Rohr ist, das an seinem stromaufwärtigen Ende am Schlitten (20,21) befestigt ist, und wobei am stromabwärtigen Ende des Dorns (24) ein flaches Spreizelement (25) befestigt ist, das in Richtung der Längserstreckung der Quersiegelbacke (15) eine grössere Breite hat als der Durchmesser des Dorns (24).

3. Vorrichtung nach Anspruch 1 oder 2, wobei die Längssiegelbacke (26) benachbart dem stromabwärtigen Ende des Dorns (24) gegen diesen anpressbar ist, und wobei der Schlitten (20,21) an der bezüglich der Dornachse (59) diametral gegenüberliegenden Seite ein Stützelement (77) aufweist, das bei abgehobener Längssiegelbacke (26) Spiel zum Dorn (24) hat.

4. Vorrichtung nach einem der Ansprüche 1 bis 3, wobei benachbart dem stromaufwärtigen Ende des Dorns (24) eine Klemmbacke (65) gegen den Dorn (24) mittels eines dritten Hubelementes (66) anpressbar ist, das synchron mit dem ersten Hubelement (76) gesteuert ist.

5. Vorrichtung nach einem der Ansprüche 1 bis 4, wobei mehrere Dorne (24) nebeneinander angeordnet sind, deren Achsen (59) in einer gemeinsamen, zur Längserstreckung der Quersiegelbacke (15) parallelen Ebene liegen, wobei jedem Dorn (24) ein separater Schlitten (20,21), eine Längssiegebacke (26), ein separat ansteuerbares erstes Hubelement (76) und ein Faltkörper (13) zugeordnet ist, und wobei der Antrieb (30) mit jedem Schlitten (20,21) separat kuppelbar ist.

6. Vorrichtung nach Anspruch 5, wobei die gemeinsame Ebene der Dornachsen (59) annähernd horizontal angeordnet ist.

7. Vorrichtung nach Anspruch 5 oder 6, wobei der Antrieb (30) eine durch einen Motor (31) angetriebene Kurbel (32) umfasst, die über eine Schubstange (33,37) einen am Gestell (10) um eine zur gemeinsamen Ebene der Dornachsen (59) parallele, zur Vorschubrichtung (A) senkrechte Schwenkachse (41) schwenkbaren ersten Hebel (39) treibt, und wobei jedem Schlitten (20,21) ein um die gleiche Schwenkachse (41) schwenkbarer zweiter Hebel (45) zugeordnet ist, der mit dem ersten Hebel (39) durch je eine Klemmeinrichtung (46) kuppelbar ist.

8. Vorrichtung nach Anspruch 7, wobei jeder zweite Hebel (45) einen Anschlagkörper (49) trägt, der in der einen Endstellung des zweiten Hebels gegen je einen gehäusefesten Anschlag (51) anschlägt und auf seiner gegenüberliegenden Seite an einem am ersten Hebel (39) befestigten Anschlag (47) anliegt.

9. Vorrichtung nach einem der Ansprüche 5 bis 8, wobei die Längssiegelbacken (26) ausserhalb der gemeinsamen Ebene der Dornachsen (59) angeordnet sind, und wobei jedem Dorn (24) stromaufwärts der Faltkörper (13) eine Umlenkrolle (11) für die Folie (2) zugeordnet ist, die am Gestell (10) um eine Achse drehbar gelagert ist, welche zur gemeinsamen Ebene der Dornachsen (59) um 60° bis 90° geneigt ist.

## Claims

1. A device for manufacturing flat packaging bags (3) from a flexible film (2) with a longitudinal sealing seam (4) and a transverse sealing seam (5), comprising:
a) a frame (10):
b) a carriage (20, 21) which is guided on the frame (10) so as to be longitudinally displaceable in the conveying direction (A);
c) a mandrel (24), which is secured to the carriage (20, 21) and around which a tube is formed with the film (2);
d) a longitudinal sealing jaw (26), which is mounted on the carriage (20, 21) so as to be displaceable transversely to the conveying direction (A), for producing the longitudinal sealing seam (4);
e) a first lifting element (76) for actuating and releasing the longitudinal seam jaw (26);
f) a drive (30) for the reciprocating motion of the carriage (20, 21);
g) a folding element (13), which is rigidly secured to the frame (10) and encloses the mandrel (24) with clearance;
h) a transverse sealing jaw (15), which is arranged transversely to the conveying direction (A) and is mounted on the frame (10) so as to be displaceable perpendicular to the conveying direction (A) and the longitudinal extension of the transverse sealing jaw (15);
i) a second lifting element (17) for displacing the transverse sealing jaw (15); and
k) cutting-off means (16) for cutting-off the bag (3).

2. A device according to claim 1, wherein the mandrel (24) is a tube, which is open at both ends and is secured at its upstream end to the carriage (20, 21), and wherein a flat expanding element (25) is secured to the downstream end of the mandrel (24) and has a larger width than the diameter of the mandrel (24) in the direction of the longitudinal extension of the transverse sealing jaw (15).

3. A device according to claim 1 or 2, wherein the longitudinal sealing jaw (26) can be pressed against the mandrel (24) adjacent the downstream end thereof, and wherein the carriage (20, 21) comprises a support element (77) on the diametrally opposite side in relation to the mandrel axle (59), which support element is arranged with clearance relative to the mandrel (24) when the longitudinal sealing jaw (26) is lifted.

4. A device according to one of claims 1 to 3, wherein a clamping jaw (65) can be pressed against the mandrel (24) by means of a third lifting element (66) adjacent the upstream end of the mandrel (24), the third lifting element (66) being controlled in synchronism with the first lifting element (76).

5. A device according to one of claims 1 to 4, wherein a plurality of mandrels (24) are arranged adjacent one another, their axles (59) lying in a common plane parallel to the longitudinal extension of the transverse sealing jaw (15), a separate carriage (20, 21), longitudinal sealing jaw (26), a separately controllable first lifting element (76) and a folding element (13) being associated with each mandrel (24), and the drive (30) being separately couplable with each carriage (20, 21).

6. A device according to claim 5, wherein the common plane of the mandrel axles (59) is arranged approximately horizontal.

7. A device according to claim 5 or 6, wherein the drive (30) comprises a crank (32), which is driven by a motor (31) and via a pushrod (33, 37) drives a first lever (39), which is pivotable on the frame (10) about a pivot axis (41), which is parallel to the common plane of the mandrel axles (59) and is perpendicular to the conveying direction (A), and wherein a second lever (45), which is couplable to the first lever (39) via a clamping device (46) in each case and is pivotable about the same pivot axis (41), is associated with each carriage (20, 21).

8. A device according to claim 7, wherein each second lever (45) carries an abutment element (49), which strikes against an abutment (51) fixed to the frame when the second lever is in the end position and rests on its opposite side against an abutment (47) secured to the first lever (39).

9. A device according to one of claims 5 to 8, wherein the longitudinal sealing jaws (26) are arranged outside the common plane of the mandrel axles (59), and wherein a deflecting roller (11) for the film (2) is associated with each mandrel (24) upstream of the folding element (13), the deflecting rollers(11) being mounted on the frame (10) so as to be rotatable about an axle which is inclined through 60° to 90° relative to the common plane of the mandrel axles (59).

## Revendications

1. Dispositif pour fabriquer des sacs d'emballage plats à partir d'une feuille flexible (2), avec un joint soudé longitudinal (4) et un joint soudé transversal (5), comprenant :
a) un bâti (10);
b) un chariot (20,21) guidé sur le bâti (10) de manière à être déplaçable longitudinalement dans une direction de transport (A);
c) un mandrin (24) fixé au chariot (20,21) et autour duquel un tuyau est formé avec la feuille (2);
d) une mâchoire de soudage longitudinal (26) montée sur le chariot (20,21) de manière à être déplaçable transversalement par rapport à la direction de transport (A) et servant à former le joint de scellement longitudinal (4);
e) un premier élément de levage (76) pour serrer et écarter la mâchoire de soudage longitudinal (26);
f) un dispositif d'entraînement (30) pour le déplacement en va-et-vient du chariot (20,21);
g) un corps de pliage (13) fixé rigidement au bâti (10) et qui entoure le mandrin (24) avec un certain jeu;
h) une mâchoire de soudage transversal (15), qui est disposée transversalement par rapport à la direction d'avance (A) et est montée sur le bâti (10) de manière à être déplaçable perpendiculairement à la direction d'avance (A) et à la direction lnogitudinale de la mâchoire de soudage transversal (15);
i) un second élément de levage (17) servant à déplacer la mâchoire de soudage transversal (15); et
k) des moyens de séparation (16) pour séparer les sacs (3).

2. Dispositif selon la revendication 1, dans lequel le mandrin (24) est un tube ouvert sur ses deux côtés et qui est fixé, par son extrémité amont, au chariot (20,21), et dans lequel à l'extrémité aval du mandrin (24) est fixé un élément plat d'écartement (25), qui possède, dans la direction longitudinale de la mâchoire de soudage transversal (15), une largeur supérieure au diamètre du mandrin (24).

3. Dispositif selon la revendication 1 ou 2, dans lequel la mâchoire de soudage longitudinal (26) est serrée, au voisinage de l'extrémité aval du mandrin (24), contre cette extrémité, et dans lequel le chariot (20, 21) possède, sur le côté diamétralement opposé à l'axe (59) du mandrin, un élément d'appui (77), qui est séparé du mandrin (24) par un certain jeu lorsque la mâchoire de soudage longitudinal (26) est écartée.

4. Dispositif selon l'une des revendications 1 à 3, dans lequel au voisinage de l'extrémité amont du mandrin (24), une mâchoire de serrage (65) peut être serrée contre le mandrin (24) à l'aide d'un troisième élément de levage (66), qui est commandé en synchronisme avec le premier élément de levage (76).

5. Dispositif selon l'une des revendications 1 à 4, dans lequel plusieurs mandrins (24) sont disposés côte-à-côte, leurs axes (59) étant situés dans un plan commun parallèle à la direction longitudinale de la mâchoire de soudage transversal (15), et dans lequel un chariot séparé (20, 21), une mâchoire de soudage longitudinal (26), un premier élément de levage (76) pouvant être commandé séparément et un corps de pliage (13) sont associés à chaque mandrin (24), et dans lequel le dispositif d'entraînement (30) peut être accouplé séparément à chaque chariot (20, 21).

6. Dispositif selon la revendication 5, dans lequel le plan commun des axes (59) des mandrins est approximativement horizontal.

7. Dispositif selon la revendication 5 ou 6, dans lequel le dispositif d'entraînement (30) comprend une manivelle (32) entrainée par un moteur (31) et qui, par l'intermédiaire d'une barre de poussée (33,37), entraîne un premier levier (39), qui peut pivoter sur le bâti (10) autour d'un axe de pivotement (41) qui est parallèle au plan commun des axes (59) des mandrins et est perpendiculaire à la direction d'avance (A), et dans lequel à chaque chariot (20,21) est associé un second levier (45), qui peut pivoter autour du même axe de pivotement (41) et qui peut être accouplé au premier levier (39) par des dispositifs de serrage respectifs (46).

8. Dispositif selon la revendication 7, dans lequel chaque second levier (45) porte un corps de butée (49), qui, lorsque le second levier est dans une position d'extrémité, vient en butée contre une butée respective (51) solidaire du boîtier et s'applique, sur son côté opposé, contre une butée (47) fixée au premier levier (39).

9. Dispositif selon l'une des revendications 5 à 8, dans lequel les mâchoires de soudage longitudinal (26) sont disposées à l'extérieur du plan commun des axes (59) des mandrins, et dans lequel à chaque mandrin (24) est associé, en amont des corps de pliage (13), un rouleau de renvoi (11) pour la feuille (2), qui est monté sur le bâti (10) de manière à pouvoir tourner autour d'un axe, qui est incliné de 60° à 90° par rapport au plan commun des axes (59) des mandrins.
